# EUROPEAN PATENT APPLICATION

(11) **EP 3 699 063 A1**
(43) Date of publication of application: **26.08.2020**
(21) Application number: 18867805.6
(22) Date of filing: 18.10.2018
(51) Int. Cl.: B62D 21/15, B60G 15/00

(54) **VEHICLE AND LONGITUDINAL BEAM THEREOF**

(30) Priority: 20.10.2017 CN 201721355376 U
(71) Applicant: NIO Nextev Limited, Central, Hong Kong (HK)
(72) Inventor: LIU, Jian, Central Hong Kong (CN)
(74) Representative: Vossius & Partner Patentanwälte Rechtsanwälte mbB
(86) International application number: PCT/CN2018/110789
(87) International publication number: WO 2019/076334

(57) **Abstract**

The invention discloses a vehicle and a longitudinal beam thereof. The longitudinal beam comprises a front segment, a middle segment and a back segment which extend in a traveling direction of the vehicle, the middle segment is located between the front segment and the back segment, the middle segment is a bending structure by the front segment and the back segment turning upwards in a height direction of the vehicle, so that there is a drop in the height direction both between the middle segment and the front segment and between the middle segment and the back segment. The present invention has a reliable strength.

## Description

### FIELD OF THE INVENTION

The invention relates to a longitudinal beam for a vehicle.

The invention further relates to a vehicle comprising the above longitudinal beam.

### BACKGROUND OF THE INVENTION

The longitudinal beam is an important bearing part in a vehicle body structure, and meanwhile is a key part for energy absorption during collision, and close attention needs to be paid to it in the structural design of the vehicle body. When the longitudinal beam is in linear shape and has a steel structure, it has certain strength and can resist relatively large collision energy.

### SUMMARY OF THE INVENTION

One aspect involved in the present invention is to provide a vehicle longitudinal beam comprising a front segment, a middle segment and a back segment which extend in a traveling direction of the vehicle, the middle segment is located between the front segment and the back segment, the middle segment is a bending structure by the front segment and the back segment turning upwards in a height direction of the vehicle, so that there is a drop in the height direction both between the middle segment and the front segment and between the middle segment and the back segment.

Wherein, in the described vehicle longitudinal beam, the middle segment has a width in a vehicle width direction which is smaller than both the front segment and the back segment.

Wherein, in the described vehicle longitudinal beam, the longitudinal beam is arranged with a rib structure on at least one side in its width direction, and the rib structure is distributed on the front segment, the middle segment and the back segment.

Wherein, in the described vehicle longitudinal beam, the rib structure includes a plurality of ribs and is formed by continuous arrangement of the plurality of ribs and the rib structure has a path generally following the extension direction of the longitudinal beam.

Wherein, in the described vehicle longitudinal beam, the rib structure is in a crossing or radial shape within the middle segment, a connection portion between the middle segment and the back segment, and a connection portion between the middle segment and the front segment.

Wherein, in the described vehicle longitudinal beam, the rib structure appears as a shape of superimposition of a frame structure and a crossing or radial shape on one side in a width direction of the middle segment, and appears as a jagged shape on the other side, wherein an end of any one of the ribs of the rib structure is connected with the end of other ribs.

Another aspect involved in the present invention is to provide a vehicle disposed with the longitudinal beam described in any of the foregoing implementations in a back portion thereof, a front segment of the longitudinal beam being connected with a sill beam, and a back segment of the longitudinal beam being connected with an anticollision beam.

Wherein, in the described vehicle, a mounting point for an air spring is disposed on a middle segment of the longitudinal beam, and an absorber is disposed separately from the air spring and is disposed on an inside of a middle segment of the longitudinal beam.

Wherein, in the described vehicle, a front segment of the longitudinal beam is connected with the sill beam through a bolt and a structural adhesive.

The longitudinal beam generally forms a shape of the Chinese character " 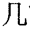 ", wherein the middle segments form a bending structure in the height direction for installing the air spring. In the lateral direction (vehicle width direction), the width of the middle segment of the longitudinal beam is sharply reduced, leaving room for mounting other components.

The inside of the longitudinal beam is disposed with a rib structure to enhance the strength of the longitudinal beam itself. The rib structure is continuous to form a continuous force transferring path. The rib structure, particularly the main rib, follows the overall shape of the longitudinal beam. The rib structure appears a plurality of intersecting structures at the middle segment and the longitudinal beam portion in the vicinity thereof, including the form of "X", radiation, cross, Chinese character " 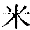 ", star, or the like, which facilitates the transfer of force towards multiple directions. At the weak link (i.e., the middle segment) in mechanics, the rib structure may also appear as a shape of superposition of the above described intersecting shape and other shapes such as a frame structure, for example, the superposition of the shape of the Chinese character " 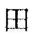 ", rectangle, square rhombus and the shaped of "X", or a superposition of these above described frame structures with a shape of Chinese character " 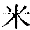 " etc..

Due to the arrangement of the above described rib structure, the longitudinal beam of the present invention has a good strength, and can meet the back collision requirement at high speed.

The longitudinal beam of the present invention is a back longitudinal beam which is arranged at the back end of the vehicle, the front segment is connected with a sill beam, and the back segment is connected with the back anticollision beam to form a complete transferring path from front to back.

The connection between the longitudinal beam and the sill beam is an improved connection mode of the combination of the high-strength bolt and the automobile structural adhesive.

Other aspects and features of the present invention will become apparent from the following detailed description with reference to the drawings. It should be understood, however, that the appended drawings are designed for purposes of illustration only and not as a limitation of the scope of the invention, as it should be read with reference to the appended claims. It should also be understood that the drawings are only intended to conceptually illustrate the structures and flows described herein unless otherwise noted, and are not necessarily drawn to scale.

### BRIEF DESCRIPTION OF THE DRAWINGS

The present invention will be more fully understood from the detailed description of the following detailed description taken in conjunction with the accompanying drawings, in which like reference numerals refer to like elements in the views throughout. Wherein:
FIG. 1 is a structural schematic view of one embodiment of a longitudinal beam involved in the present invention, which is a front view;
FIG. 2 is a top view of the longitudinal beam in FIG. 1;
FIG. 3 is a schematic view of a path trend of a rib structure in a longitudinal beam involved in the present invention, shown in the figure is a side of the longitudinal beam in the width direction; and
FIG. 4 is a schematic view of a path trend of a rib structure in a longitudinal beam involved in the present invention, shown in the figure is the other side of the longitudinal beam.

### DETAILED DESCRIPTION OF THE EMBODIMENT(S) OF THE INVENTION

In order to assist those skilled in the art to definitely understand the claimed subject matter of the present invention, the detailed description of the present invention is described in detail below with reference to the accompanying drawings.

The longitudinal beam involved in the invention is a used on a vehicle, in particular on an electric automobile. The longitudinal beam is a rear longitudinal beam which is arranged at the rear portion of the vehicle and is made of an aluminum alloy. The longitudinal beam structure provided by the invention is light in weight and satisfies collision-related regulations.

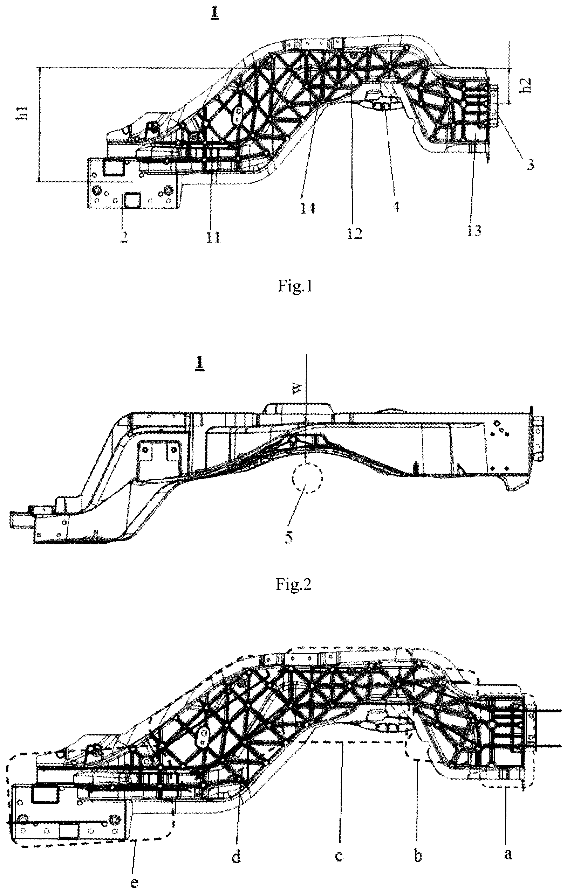

Referring to FIG. 1, FIG. 1 is a structural schematic view of a longitudinal beam involved in the present invention, which is a front view. The longitudinal beam 1 comprises a front segment 11, a middle segment 12, and a back segment 13 extending in a travelling direction (i.e., a forward and backward direction) of a vehicle. The middle segment 12 is located between the front segment 11 and the back segment 13. The middle segment 12 of the longitudinal beam is formed by the front segment 11 and the back segment 13 turning upwards in the height direction of the vehicle to form a bending structure. As a whole, the longitudinal beam 1 is not in linear shape, but rather forms a shape of the Chinese character " 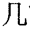 ". There is a height drop of a certain distance between the middle segment 12 and the front segment 11, and between the middle segment 12 and the back segment 13. As can be seen from the figure, the height difference h1 between the middle segment and the front segment is greater than the height difference h2 between the middle segment and the back segment.

Referring to FIG. 2, FIG. 2 is a top view of the longitudinal beam in FIG. 1. As can be seen from the figure, the longitudinal beam has a variable width in the direction of the width of the vehicle. The width of the middle segment of the longitudinal beam is smaller than the width of the front segment, the width of the middle segment of the longitudinal beam is further smaller than the width of the back segment, as can be seen from the figure, the width of the middle segment w is much smaller than the front segment or the back segment, that is, the minimum width of the longitudinal beam appears on the middle segment. The position of the middle segment is associated with the position of the seat, primarily the second row of seats, in the vehicle. When the width of the seat is relatively wide (such as a seat for three), the lateral space occupied by the seat is relatively large, the width of the longitudinal beam at the middle segment is set to be narrow, and in the lateral space, it may be used to make way for a certain space to meet the space requirements of the seat; also, the part of space the longitudinal beam makes way for may also be installed with an absorber 5 of the carframe, so that the absorber and the air spring with the buffering effect are arranged separately, avoiding large size arrangement space requirements caused by integrating the two together. The mounting position of absorber 5 has been shown in the figure. In this case, the middle segment loses the inside space, which results in a sharp narrowing of the width of the longitudinal beam at the middle segment.

Back to FIG. 1, a rib structure 14 is arranged on at least one side of the longitudinal beam 1 in the width direction on the front segment 11, the middle segment 12, and the back segment 13. As can be seen from the figure, the rib structure 14 includes a plurality of ribs, and the ribs are continuously arranged to form a rib structure. The so-called "continuously arranged" refers to the interconnection between the ribs, i.e., the end of each rib is connected to the end of other rib(s) (which may be one rib, and may also be two ribs, three ribs or even more ribs), thereby forming a continuous rib connection structure. As a whole, the arrangement of the rib structure 14 is along a path following the extension direction of the longitudinal beam. As the rib structure forms a complete force transferring path, the strength of the longitudinal beam is enhanced.

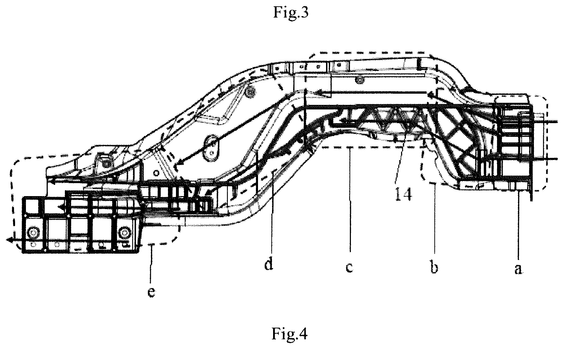

FIGS. 3 and 4 show specific path trends of the rib structure of the longitudinal beam. FIG. 3 shows the rib structure on one side of the longitudinal beam in the width direction, and FIG. 4 shows the rib structure on the other side of the longitudinal beam. Referring to FIG. 3 in detail, the rib structure 14 includes a first section a wherein the main rib extends substantially horizontally, a second section b wherein the main rib extends obliquely upwards, a third section c wherein the main rib extends substantially horizontally, a fourth section d wherein the main rib extends obliquely downwards, and a fifth segment e wherein the main rib extends substantially horizontally (the order of the sections may be considered the direction of collision force). The first section a and the fifth section e generally correspond to the back segment and the front segment of the longitudinal beam, the second section b, the third section c, and the fourth section d are bending structures. The third section c generally corresponds to the middle segment of the longitudinal beam, the second section b is a connection portion connecting between the back segment and the middle segment of the longitudinal beam, and the fourth section d is the connection portion connecting between the middle segment and the front segment of the connection longitudinal beam. Wherein the ribs of the second section b, the third section c and the fourth section d are arranged in a crossed structure, which may be of the form of "X", radiation, cross, Chinese character " 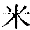 ", star, or the like, wherein the main ribs are presented in an obliquely upward-horizontal-obliquely downward path, which facilitates the transfer of force towards each direction.

Since the middle segment is the bending structure on the whole of the longitudinal beam and the width of the middle segment is small, the middle segment is a weak link of the longitudinal beam in mechanics. The rib structure of the middle segment (third section) may also be arranged, on one side (the inside), as a shape of superposition of a intersecting shape and a frame structure such as a rectangle, square or rhombus, for example, the superposition of the shape of the Chinese character " 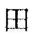 ", rectangle, square or rhombus and the shaped of "X", or a superposition of these above described frame structures with a shape of Chinese character " 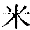 " etc., wherein the main rib being arranged in a horizontal direction. On the other side (the outside), referring to FIG. 4, the rib structure 14 is arranged in a jagged shape.

No matter in which structure or shape the rib structure is arranged, it is necessary to ensure that the ribs are continuous, there are interconnections between the ribs, and the end of each rib is connected to the end of the other ribs, thereby integrally forming a complete and continuous force transferring path to enhance the overall strength of the longitudinal beam.

Back to FIG. 1, the front segment 11 of the longitudinal beam is connected to a sill beam 2, and the back segment 13 is connected to the back anticollision beam 3. When the vehicle is subjected to a back collision force, the collision force is transferred forward from the back segment. Because of the arrangement of the rib structures, the force follows the structure of the longitudinal beam during transfer. Particularly in the weak middle segment, due to the fact that the rib structure appears to be crossed or radial and there are continuous structures between the ribs, the collision force can be dispersed towards each preset direction, effectively enhancing the strength of the longitudinal beam is in mechanics.

The front segment 11 of the longitudinal beam is connected with the sill beam 2 through high-strength bolt connection in conjunction with a structural adhesive, and the structural adhesive is disposed on the junction face of the longitudinal beam and the sill beam.

A mounting point 4 for an air spring is left on the middle segment of the longitudinal beam, the absorber is arranged separately from the air spring, the air spring is arranged on the longitudinal beam, and the absorber 5 is arranged on the inside of the longitudinal beam (see FIG. 2).

The present longitudinal beam has good strength and can meet the back collision requirement at high speed, for example, a back collision speed of 80 km/h as specified by the U.S. automobile safety technology regulation fmvss 301.

While specific embodiments of the present invention have been shown and described in detail to explain the principles of the invention, it should be understood that the invention may be implemented otherwise without departing from such principles.

## Claims

1. A vehicle longitudinal beam (1), comprising a front segment (11), a middle segment (12) and a back segment (13) which extend in a traveling direction of the vehicle, the middle segment (12) is located between the front segment (11) and the back segment (13), wherein: the middle segment (12) is a bending structure by the front segment (11) and the back segment (13) turning upwards in a height direction of the vehicle, so that there is a drop in the height direction both between the middle segment (12) and the front segment (11) and between the middle segment (12) and the back segment (13).

2. The vehicle longitudinal beam of claim 1, wherein: the middle segment (12) has a width in a vehicle width direction which is smaller than both the front segment (11) and the back segment (13).

3. The vehicle longitudinal beam of claim 1, wherein: the longitudinal beam (1) is arranged with a rib structure (14) on at least one side in its width direction, and the rib structure (14) is distributed on the front segment (11), the middle segment (12) and the back segment (13).

4. The vehicle longitudinal beam of claim 3, wherein: the rib structure (14) includes a plurality of ribs and is formed by continuous arrangement of the plurality of ribs and the rib structure (14) has a path generally following the extension direction of the longitudinal beam.

5. The vehicle longitudinal beam of claim 3, wherein: the rib structure (14) is in a crossing or radial shape within the middle segment (12), a connection portion between the middle segment (12) and the back segment (13), and a connection portion between the middle segment (12) and the front segment (11).

6. The vehicle longitudinal beam of claim 3, wherein: the rib structure (14) appears as a shape of superimposition of a frame structure and a crossing or radial shape on one side in a width direction of the middle segment (12), and appears as a jagged shape on the other side, wherein an end of any one of the ribs of the rib structure (14) is connected with the end of other ribs.

7. A vehicle disposed with the longitudinal beam (1) of any of claims 1 to 6 in a back portion thereof, a front segment (11) of the longitudinal beam being connected with a sill beam (2), and a back segment (13) of the longitudinal beam being connected with an anticollision beam (3).

8. The vehicle of claim 7, wherein: a mounting point (4) for an air spring is disposed on a middle segment (12) of the longitudinal beam, and an absorber (5) is disposed separately from the air spring and is disposed on an inside of a middle segment (12) of the longitudinal beam.

9. The vehicle of claim 7, wherein: a front segment (11) of the longitudinal beam is connected with the sill beam (2) through a bolt and a structural adhesive.
